# FASCICULE DE BREVET EUROPEEN

(11) **EP 0 515 653 B1**
(45) Date de publication et mention de la délivrance du brevet: **12.10.1994**
(21) Numéro de dépôt: 92902188.9
(22) Date de dépôt: 17.12.1991
(51) Int. Cl.: F16B 19/10

(54) **PROCEDE DE RIVETAGE DE MATERIAUX AU MOYEN D'UN RIVET AVEUGLE ET RIVETS AVEUGLES CORRESPONDANTS**
VERFAHREN ZUR NIETUNG VON MATERIALIEN MITTELS EINER BLINDNIETE SOWIE ENTSPRECHENDE BLINDNIETEN
METHOD OF RIVETING MATERIALS USING A BLIND RIVET, AND CORRESPONDING BLIND RIVETS

(30) Priorité: 20.12.1990 FR 9016028
(43) Date de publication de la demande: 02.12.1992
(73) Titulaire: STE ATELIERS DE LA HAUTE-GARONNE - ETS AURIOL ET CIE, F-31130 Balma (FR); GAQUERE, JEAN-PIERRE, F-80560 Mailly-Maillet (FR)
(72) Inventeur: GAQUERE, Jean-Pierre, F-80560 Mailly-Maillet (FR)
(74) Mandataire: Barre, Philippe
(86) Numéro de dépôt international: FR9101025
(87) Numéro de publication internationale: WO9211465

(56) Documents cités:
- EP-A- 0 210 802
- US-A- 3 377 907
- US-A- 4 127 345
- US-A- 4 832 547

## Description

La présente invention concerne un procédé de rivetage d'un rivet aveugle et des rivets aveugles correspondants.

Les rivets dits aveugles sont généralement constitués par une douille tubulaire présentant un alésage longitudinal et un mandrin comportant, d'une part, une tête de mandrin de diamètre supérieur à l'alésage de la douille et, d'autre part, une tige logée dans l'alésage de la douille et dépassant de celui-ci à l'extrémité de la douille opposée à la tête de mandrin. De tels rivets, tels que décrits dans les brevets US 3 377 907 et US 4 127 345 sont adaptés après traction sur la tige de mandrin pour former une tête de rivet aveugle, par introduction de la tête de mandrin dans l'extrémité adjacente de la douille, et pour maintenir assemblés des matériaux entre une tête de douille préformée et la tête aveugle.

La tige de mandrin est adaptée pour être rompue en fin de rivetage, afin de ne plus dépasser de la douille.

Ces rivets sont dits aveugles car ils sont introduits et mis en place sur des pièces à assembler, par un seul côté de l'assemblage. Une telle mise en place est nécessaire lorsque l'un des côtés d'un assemblage n'est pas accessible.

Une fois posé, le rivet aveugle soumet l'assemblage de matériaux à des contraintes de compression de type connu.

Cependant, dès l'arrêt de l'application des forces nécessaires à la mise en place du rivet, l'effet de compression de l'assemblage à tendance à se relâcher, par un effet d'hystérésis, de sorte qu'une relaxation axiale conduisant à un relâchement néfaste se produit. La douille et l'assemblage présentent alors entre eux un certain jeu, qui nuit à la bonne solidarisation de l'assemblage, et crée un mauvais accostage de ces différents éléments entre eux.

La présente invention a pour but de pallier l'ensemble de ces inconvénients en réalisant un procédé de rivetage au moyen de rivets aveugles, résultant en un accostage correct, n'ayant pas tendance à se relâcher, et ne créant pas de jeu néfaste entre les différents éléments à assembler.

L'invention vise également la création de rivets permettant la mise en oeuvre d'un tel procédé.

A cet effet, la présente invention concerne un procédé de rivetage de matériaux au moyen d'un rivet aveugle comprenant une douille tubulaire munie d'un alésage longitudinal et un mandrin présentant, d'une part, une tête de diamètre supérieur à l'alésage de la douille, et d'autre part, une tige logée à l'intérieur de l'alésage de la douille et dépassant de celui-ci à l'opposé de la tête, ledit procédé consistant à :
a) introduire le rivet dans un orifice percé à travers des matériaux à assembler, par un côté de cet assemblage de matériaux, et étant caractérisé en ce qu'il consiste en outre à :
b) exercer sur la douille une force d'extension entre, d'une part, une tête de butée située à une extrémité de la douille et, d'autre part, un moyen d'appui ménagé à l'intérieur de la douille pour mettre ladite douille en extension longitudinale sur une partie substantielle de sa longueur,
c) bloquer la douille dans cette position d'extension longitudinale de part et d'autre de l'assemblage en conformant une tête de blocage à l'opposé de la tête de butée en contact avec une première face d'appui de l'assemblage, ladite tête de blocage étant en appui contre une seconde face d'appui de l'assemblage, et
d) exercer une traction sur le mandrin pour provoquer une rupture de la tige de mandrin.

Ce procédé de rivetage, en raison de la mise en extension de la douille avant son blocage de part et d'autre de l'assemblage, permet d'obtenir un assemblage qui se trouve en mode de compression après la pose, et qui donc n'a pas tendance, avec le temps, à se relâcher.

Dans le procédé selon l'invention, l'introduction du rivet aveugle dans un alésage percé à travers les matériaux à assembler peut se faire avant ou après la mise en extension de la douille. On obtient ainsi deux types d'assemblage par rivets aveugles présentant tous deux un accostage intime des pièces à assembler et des rivets, mais différant par des effets secondaires, tels que la résistance au cisaillement, ainsi que par l'outillage permettant de réaliser ces assemblages.

Dans un premier mode de réalisation, le rivet aveugle est introduit dans un alésage percé à travers les pièces à assembler par un des côtés uniquement de l'assemblage, préalablement à l'extension de la douille. Dans ce cas, la douille du rivet aveugle utilisée présente une tête préformée qui est mise en contact avec une des faces de l'assemblage. La tête aveugle, dite tête de butée, est alors formée par traction sur la tige de mandrin de manière classique. La mise sous tension de la douille est effectuée après une première rupture de la tige de mandrin. On applique une force d'extension entre la tête de butée et un moyen d'appui ménagé sur la douille. Cette extension a tendance à dégager de l'assemblage la tête préformée de la douille. On reforme alors cette tête pré formée en la repoussant contre l'assemblage pour bloquer en position d'extension la douille de part et d'autre de cet assemblage.

Ainsi, dans ce procédé, on utilise la traction exercée sur le mandrin dans un premier temps pour former la tête de butée avant la première rupture de la tige, et, dans un second temps, pour réaliser une extension de la douille après la première rupture de cette tige.

Un tel procédé permet d'utiliser pour la mise en place du rivet aveugle des outils de pose classiques et peut donc être mis en oeuvre sans adaptation majeure sur des installations de rivetage déjà existantes.

Lorsque l'extension de la douille est réalisée préalablement à l'introduction du rivet dans un alésage percé à travers les pièces à assembler ou (pour ce même type de rivet) préalablement à la réalisation de la tête de blocage, on utilise pour réaliser cette extension des outils spécifiques.

La douille est alors étirée entre un premier outil exerçant une traction sur la tête de butée de la douille et un second outil poussant sur un moyen d'appui solidaire de cette même douille.

La douille étirée est ensuite introduite dans les pièces à assembler, et bloquée en position d'extension, par traction sur la tige de mandrin. Cette traction entraîne la formation d'une tête de blocage et la douille enserre ainsi intimement l'assemblage tout en étant étirée. La poursuite de la traction de la tige du mandrin provoque la rupture de cette tige, de manière connue.

Selon ce procédé, le second outil de pose peut être constitué en une seule partie et être retiré de la douille après le rivetage ou bien être constitué en deux parties. Avantageusement, la constitution en deux parties permet de laisser en place à l'intérieur de la douille, la première partie du second outil après rivetage. Seule la seconde partie du second outil est retirée.

Avantageusement, un tel procédé réalise un rivetage présentant un bon accostage des matériaux, mais en outre, en raison de la présence de la première partie du second outil dans la douille, on obtient une meilleure résistance au cisaillement, ainsi qu'un gonflement propice du rivet.

Un tel procédé nécessite cependant la mise en oeuvre de dispositifs de pose spécifiques.

La présente invention concerne également un rivet aveugle pour la mise en oeuvre du procédé, ledit rivet comportant une douille tubulaire munie d'un alésage longitudinal et un mandrin présentant, d'une part, une tête de diamètre supérieur à l'alésage de la douille, et d'autre part, une tige de mandrin logée à l'intérieur de l'alésage et adaptée pour dépasser de cet alésage du côté opposé à la tête de mandrin, ledit rivet étant caractérisé en ce qu'il comporte, en outre :
. au niveau de la douille :
   - une tête préformée à l'extrémité de la douille opposée à la tête de mandrin et,
   - un moyen d'appui ménagé à l'intérieur de l'alésage de la douille au voisinage de la tête préformée, et
. au niveau du mandrin :
   - une tige présentant une première et une seconde parties, et
   - une première et une seconde rainures de rupture ménagées selon la circonférence de la tige de mandrin respectivement dans la première et la seconde parties de la tige de mandrin.

Un tel rivet est adapté après double rupture de la tige de mandrin pour réaliser un rivetage sous compression, avec un bon accostage des matériaux en présence.

Un tel rivet peut avantageusement être mis en place à l'aide d'outils existants sans modifications majeures de ceux-ci.

Avantageusement, le moyen d'appui ménagé sur ce rivet peut être amovible. Par exemple, il peut se séparer de la douille en fin de rivetage, ou il peut se déformer pour ne plus faire obstacle à l'enlèvement de la tige de mandrin rompue selon la première ligne de rupture.

La présente invention concerne également un rivet pouvant être mis en extension avant son introduction dans les matériaux à assembler.

Un tel rivet utilisé pour la mise en oeuvre du procédé est du type comportant une douille tubulaire munie d'un alésage longitudinal et un mandrin présentant, d'une part, une tête de diamètre supérieur à l'alésage de la douille et, d'autre part, une tige de mandrin logée à l'intérieur de l'alésage de la douille et adaptée pour dépasser de cet alésage du côté opposé à la tête de mandrin, ledit rivet étant caractérisé en ce qu'il comporte en outre :
. au niveau de la douille :
   - une tête pré formée à l'extrémité opposée à la tête de mandrin, ladite tête présentant une surface de préhension agencée pour permettre d'exercer un effort visant une mise en extension de la douille, et une surface d'appui contre une première face d'un assemblage de matériaux à assembler,
   - un moyen d'appui ménagé à l'intérieur de l'alésage de la douille adapté pour former une surface de poussée agencée pour permettre d'exercer un effort antagoniste à celui exercé sur la surface de préhension en vue de la mise en extension de la douille, et :
. au niveau du mandrin :
   - une tige de mandrin présentant une rainure de rupture.

Ce rivet a l'avantage de présenter une tige de mandrin classique, à une seule rainure de rupture.

La tête de butée de ce rivet est avantageusement munie d'une surface de préhension pour coopération avec un moyen de préhension porté par le premier outil de pose, permettant à cet outil de tirer sur la douille. Ce moyen de préhension peut être de tout type, par exemple coopération de deux épaulements, ou coopération d'un ergot dans une gorge annulaire, ou coopération d'une mâchoire et de deux encoches réparties de part et d'autre de la tête préformée et adaptées pour recevoir une mâchoire correspondante du premier outil de pose.

Avantageusement, un tel type de rivet peut également être mis en extension après sa mise en place dans l'alésage de l'assemblage, comme le rivet selon le premier mode de réalisation.

Avantageusement encore, les rivets selon l'invention peuvent être munis de moyens d'appui formant une partie saillante continue ou discontinue à l'intérieur de l'alésage de la douille.

D'autres objets, caractéristiques et avantages de la présente invention ressortiront d'ailleurs de la description qui suit, à titre d'exemple non limitatif en référence aux dessins annexés, dans lesquels :
- la figure 1 est une vue en coupe longitudinale montrant un rivet aveugle de type connu, lors de sa mise en place dans des matériaux à assembler,
- la figure 2 est une vue semblable à la figure 1 montrant un rivet aveugle de type connu, une fois mis en place,
- la figure 3 est une vue en coupe longitudinale d'un rivet selon un premier mode de réalisation de l'invention, avant sa mise en place dans les matériaux à assembler,
- les figures 4 à 7 sont des vues semblables à la figure 3 montrant les étapes successives du rivetage des matériaux à assembler,
- les figures 8a et 8b sont des vues en coupe montrant la réalisation d'une tête de blocage conforme à l'invention, selon une première et une seconde variantes de réalisation,
- la figure 9 est une vue en coupe montrant une variante de réalisation de la tête de butée selon l'invention,
- les figures 10 à 12 sont des vues en coupes longitudinales montrant un second mode de réalisation du rivet selon l'invention lors des différentes étapes du rivetage, et
- la figure 13 est une vue en coupe montrant une première variante du second mode de réalisation selon les figures 10 à 12.

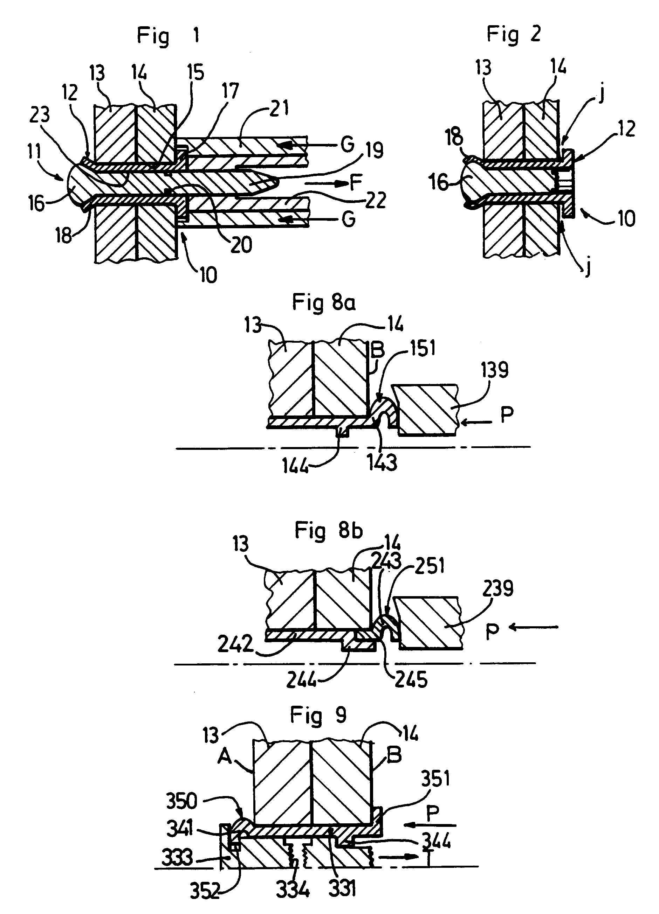

Comme représenté aux figures 1 et 2, il est déjà connu d'assembler deux matériaux 13, 14 au moyen d'un rivet aveugle 10.

Ce rivet est appelé aveugle car il est mis en place par un seul côté de l'assemblage, l'autre côté étant non accessible. Sur les figures annexées, le côté aveugle est arbitrairement le côté gauche de chaque figure.

Les rivets aveugles 10 connus à ce jour (figure 1) comportent une douille tubulaire 12 munie d'un alésage longitudinal 23, et un mandrin 11 présentant, d'une part, une tête 16 de diamètre supérieur à l'alésage 23 de la douille et, d'autre part, une tige de mandrin 19. Cette tige de mandrin est logée à l'intérieur de l'alésage 23 de la douille et dépasse de celui-ci du côté opposé à la tête 16 de mandrin. Une rainure de rupture 20 est ménagée sur la tige de mandrin.

Pour la mise en place de ce rivet, on exerce une traction selon la flèche F (figure 1) par l'intermédiaire d'un outil formant pince 22 enserrant la tige de mandrin 19. Simultanément, on applique une tête préformée 17 de la douille fermement (flèches G de la figure 1) contre l'assemblage 13, 14 à l'aide d'un outil de pose 21.

Dans un premier temps, en poursuivant la traction F sur le mandrin 19, on provoque de manière classique, la réalisation d'une tête aveugle de rivet en enfonçant la tête de mandrin 16 dans l'extrémité 18 de la douille. Cette tête est bloquée contre l'assemblage 13, 14 et tend à resserrer ces deux matériaux l'un contre l'autre au maximum. Une fois cette tête aveugle formée et bloquée en position, la poursuite de la traction F engendre, dans un second temps, la rupture de la tige de mandrin 19 selon la rainure de rupture 20.

Le rivet se présente alors tel que montré à la figure 2. On notera qu'en raison d'un phénomène de relaxation des matériaux ayant été soumis à la traction F, un jeu j a tendance à se créer entre la tête de la douille 12 et l'assemblage 13, 14. En effet, la douille, ayant été soumise à un effort de compression sous l'effet de la traction sur la tige du mandrin, retrouve sa longueur initiale et vient donc créer ce jeu j entre les éléments à assembler. L'accostage de la douille 12 et des pièces 13, 14 à assembler est ainsi mal réalisé. Ce jeu a, par ailleurs, tendance à augmenter avec le temps.

La présente invention vise notamment à pallier cet inconvénient.

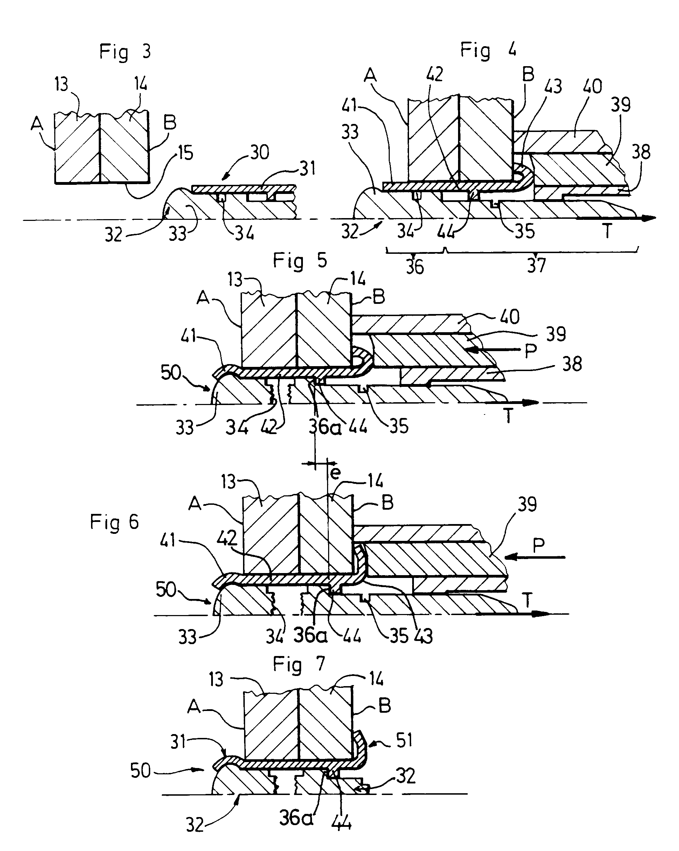

A cet effet, selon le mode de réalisation représenté aux figures 3 à 7, la douille 31 du rivet 30 selon l'invention est soumise à une extension pendant sa mise en place.

Un premier mode de réalisation du rivetage selon l'invention est décrit ci-après.

Le rivet 30, constitué de la douille 31 et du mandrin 32 inséré à l'intérieur de la douille, est introduit dans l'alésage 15 de deux matériaux 13 et 14 à assembler (figure 3). Cette introduction se fait par un des côtés de l'assemblage, en l'exemple le côté droit (le côté gauche étant supposé inaccessible).

Comme cela est plus visible à la figure 4, la douille du rivet selon l'invention comporte une tête préformée 43 qu'un outil de pose 39 amène au contact d'une seconde face B de l'assemblage 13, 14. L'outil en forme de pince 38 enserre entre ses mâchoires l'extrémité 37 de la tige de mandrin à l'opposé de la tête de mandrin 33.

La douille 31 selon l'invention est munie d'un moyen d'appui 44 ménagé dans l'alésage interne de la douille. En l'exemple représenté, ce moyen d'appui est un épaulement annulaire faisant saillie à l'intérieur de l'alésage.

Le mandrin 32 selon l'invention comporte, quant à lui, outre sa tête 33, une première partie 36 munie d'une première rainure de rupture 34 et une seconde partie 37 munie d'une seconde rainure de rupture 35.

La section de la première partie de tige 36 est adaptée pour correspondre à celle de l'alésage interne de la douille dans sa partie de plus grande section. La section de la seconde partie de la tige est adaptée pour correspondre à la section de l'alésage interne de la douille au niveau du moyen d'appui 44. Ainsi, le diamètre de la première et de la seconde parties de la tige de mandrin va en décroissant.

Comme le montre la figure 4, un contre-outil de pose 40 s'appuie sur la seconde face B de l'assemblage des matériaux 13 et 14.

Dans l'étape de réalisation représentée à la figure 4, la tête préformée 43 de la douille 31 est simplement amenée en appui contre la seconde face B de l'assemblage.

L'extrémité 41 de la douille adjacente à la tête de mandrin 33 n'est pas encore déformée. On exerce alors une traction T sur la seconde partie 37 de la tige de mandrin, tout en poussant (flèche P, figure 5) l'outil de pose 39 en sens opposé à cette traction. Il en résulte une déformation progressive de l'extrémité 41 de la douille adjacente à la tête de mandrin 33 et un enfoncement de cette tête 33 à l'intérieur de l'extrémité de la douille 41. La tête de butée 50 ainsi formée vient en butée contre une première face A de l'assemblage 13, 14, lui-même en appui par sa seconde face B contre la tête préformée 43 de la douille.

Dès que la tête de butée 50 est formée et est bloquée contre la première face A de l'assemblage, par l'action des forces antagonistes P et T, la poursuite de la traction T entraîne la rupture de la première rainure de rupture 34 (figure 5). Le reste de la première partie de tige de mandrin 36 est alors entraîné avec la seconde partie de tige de mandrin 37, toujours soumise à la traction T.

La première partie de mandrin 36 coopère alors par son extrémité 36a avec l'épaulement 44 pour étirer le corps tubulaire 42 de la douille entre la tête de butée 50 et l'épaulement ou moyen d'appui 44.

Pendant cet étirement e (figures 5 et 6), l'outil de pose 39 continue à pousser contre la tête préformée 43. L'étirement e a, en effet, tendance à écarter cette tête 43 de la seconde face B de l'assemblage. L'outil de pose 39 reforme alors la tête 43 pour la ramener au contact de cette face, de façon à créer une tête de blocage 51.

Lorsque l'étirement du corps de la douille est arrivé à son maximum, la poursuite de la traction T sur la seconde partie 37 de la tige de mandrin provoque la rupture de la seconde rainure de rupture 35 (figures 6 et 7).

La douille 31 enserre alors fermement l'assemblage 13 et 14 entre une tête de butée 50 et une tête de blocage 51, reformée pendant la pose, afin de garder l'extension e du corps de la douille obtenue pendant la pose du rivet.

De ce fait, même après relâchement des matériaux soumis aux différentes forces en présence, il n'apparaît plus de jeu j entre la tête de blocage 51 de la douille et l'assemblage 13, 14.

L'accostage du rivet et des matériaux à assembler est ainsi correctement réalisé, et n'a pas tendance à se relâcher dans le temps.

Un tel type de rivet est facile à mettre en place car il ne nécessite pas de matériel de pose spécifique. En effet, le matériel de pose utilisé jusqu'à présent pour les rivets classiques peut être utilisé sans adaptation majeure.

Le rivetage obtenu est par contre nettement amélioré, en raison d'un accostage intime entre les matériaux 13 et 14 et la douille 31 du rivet 30.

Un tel type de rivet présente, en raison de la double rupture des première et seconde parties 36, 37 de la tige de mandrin, une résistance au cisaillement semblable aux rivetages existants. Cette résistance au cisaillement peut être améliorée, comme on le verra plus loin dans le second mode de réalisation de l'invention.

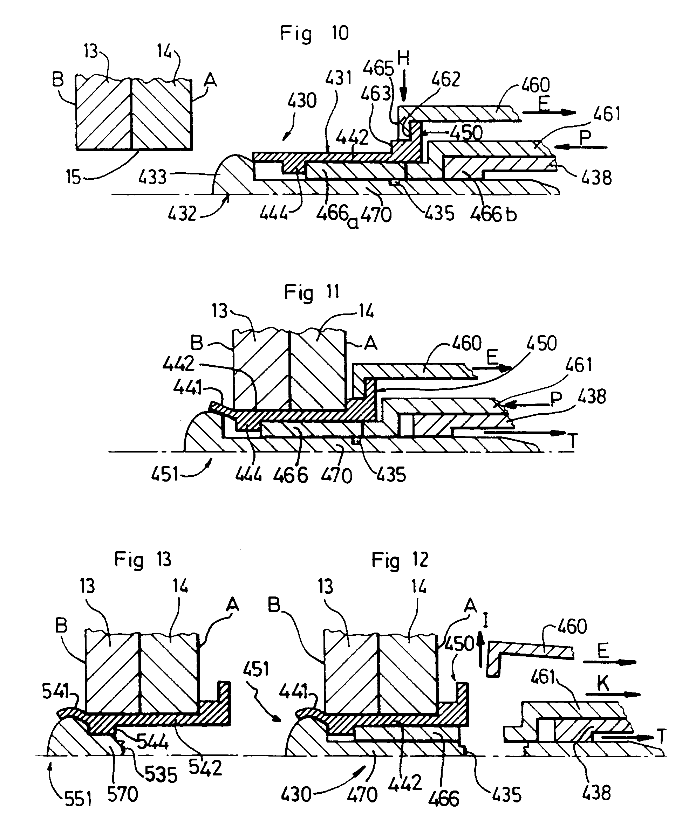

Diverses variantes de réalisation peuvent être utilisées pour la formation de la tête de blocage 51, comme représenté aux figures 8a et 8b.

Comme le montre la figure 8a, la tête préformée 143 de la douille du rivet peut être reformée lors du rivetage par flambage. Dans ce cas, l'outil de pose 139 exerce une poussée P et écrase la tête de blocage 151 contre la seconde face B de l'assemblage 13, 14.

Il est à noter que, pour des raisons de clarté, les figures 8a et 8b ne montrent que certains des outils utilisés pour la réalisation du rivetage.

Comme représenté à la figure 8b, l'extrémité de la douille munie de la tête préformée 243 peut être réalisée en un métal plus maléable que le corps de cette douille 242. Ce métal est rapporté par exemple par vissage 245 sur le corps de la douille. La formation de la tête de blocage 251 s'en trouve ainsi facilitée.

Selon une troisième variante de réalisation pouvant être combinée avec le premier mode de réalisation ou l'une ou l'autre des variantes représentées aux figures 8a et 8b, la tête de butée 350 peut, elle aussi, être réalisée par flambage (figure 9). Dans ce cas, une rainure de maintien 352 est effectuée au bas de la tête 333 du mandrin correspondant pour recueillir l'extrémité 341 de la douille. Lors de la traction T, cette extrémité 341, ainsi maintenue, permet de réaliser la tête de butée 350 par flamblage et de bloquer cette tête contre la première face A de l'assemblage 13, 14 ; le reste du procédé de rivetage demeure inchangé.

En variante, il est possible de faire en sorte que le moyen d'appui se rompe une fois le blocage des têtes de butée et de blocage effectué et avant rupture de la tige de mandrin selon la seconde ligne de rupture. Par exemple, le moyen d'appui peut être muni à cet effet d'une rainure de rupture au niveau de sa liaison avec le corps de la douille.

En variante encore, ce moyen d'appui peut se déformer pour laisser sortir la partie de mandrin située après la première ligne de rupture, lorsque la douille étirée est bloquée entre la tête de butée et la tête de blocage.

On obtient ainsi un rivetage propre dans lequel il ne subsiste pas de parties de tiges de mandrin susceptibles de vibrer ou bouger. Cependant, la résistance au cisaillement d'un tel rivet est amoindrie.

Comme indiqué précédemment, l'invention concerne également un second mode de réalisation (figures 10 à 13) de rivet dans lequel l'accostage, mais aussi la résistance au cisaillement, sont améliores.

Avec ce second type de rivet 430, l'emplacement de la tête de butée 450 et de la tête de blocage 451 est inversé par rapport au premier mode de réalisation. Pour garder une symétrie de description avec le premier mode de réalisation, les première et seconde faces A et B de l'assemblage 13, 14 ont donc été également inversées. De même, pour plus de clarté, on a attribué aux éléments de ce second mode de réalisation présentant les mêmes fonctions que dans le cadre du premier mode de réalisation, les mêmes références précédées du chiffre 4. Ainsi, le rivet référencé 30 dans le premier mode de réalisation devient le rivet 430 dans le second mode de réalisation.

Dans le cadre de ce second mode de réalisation, il est à noter que l'extension du corps de la douille 442 est préalable à son introduction dans un alésage 15 percé au travers des matériaux 13, 14 à assembler.

Cette extension est réalisée grâce à un premier et un second outils de pose respectivement 460, 461 exerçant une force d'extension entre un moyen de butée 444 et une tête de butée 450. L'extension est ainsi réalisée par action sur les mêmes éléments que précédemment.

Selon ce second mode de réalisation, le rivet 430 présente une douille 431 ayant un corps tubulaire 442 et percée d'un alésage longitudinal. Un moyen d'appui 444 est ménagé dans l'alésage longitudinal. Dans le cas présent, ce moyen est un épaulement annulaire faisant saillie dans l'alésage de la douille. La douille 431 présente, à l'opposé de ce moyen d'appui, une tête préformée 450 présentant une surface de préhension 462 et une surface d'appui 463, respectivement pour contact avec le premier outil 460 et pour contact avec la première face A de l'assemblage 13, 14.

Le mandrin 432 présente, quant à lui, une tête 433 de diamètre supérieur à l'alésage de la douille et une tige de mandrin 470 logée dans cet alésage. La section de la tige de mandrin 470 est adaptée pour correspondre à la section de l'alésage de la douille au niveau du moyen d'appui 444. La tige de mandrin 470 est, en outre, munie d'une rainure de rupture 435.

Les outils de pose d'un tel rivet présentent une forme spécifique et sont constitués, en plus de l'outil formant pince 438 enserrant la tige de mandrin 470, du premier et du second outils de pose 460 et 461.

Le premier outil de pose 460 peut se déplacer selon la direction des flèches E, H et I (figures 10 et 12), le second outil de pose 461 se déplace selon les flèches P et K (figures 10 et 12).

Le premier outil de pose 460 présente un épaulement 465 formant moyen de préhension et adapté pour coopérer avec la surface de préhension 462 de la tête de butée. Le second outil de pose 461 présente une première partie 466ₐ adaptée pour entrer en contact avec l'épaulement 444 et une seconde partie 466_{b}. La première partie 466ₐ de l'outil est encore appelée douille rapportée.

Comme cela est visible à la figure 10, la douille 431 du rivet selon l'invention munie de son mandrin 432 est mise en extension préalablement à son introduction dans l'alésage 15 de l'assemblage 13, 14. A cet effet, le premier outil est amené au-dessus de la tête de butée 450 puis abaissé selon le sens de la flèche H pour mise en contact de l'épaulement 465 de l'outil avec la surface de préhension 462 de la tête de butée.

Le second outil 461 est introduit simultanément dans l'alésage de la douille jusqu'à ce que sa première partie 466 entre en contact avec la surface de poussée de l'épaulement 444 de la douille.

Le premier outil 460 tire sur la tête de butée selon la flèche E, tandis que le second outil 461 pousse sur l'épaulement 444, selon la flèche P.

Le résultat de ces deux forces antagonistes s'exerçant sur chacune des extrémités de la douille, est une mise en extension du corps tubulaire 442 de la douille.

La douille ainsi étirée et munie de son mandrin 432 est alors introduite à l'intérieur de l'alésage 15 de l'assemblage 13, 14. Cette introduction (réalisée par un seul côté) se poursuit jusqu'à ce que la surface d'appui 463 de la tête de butée soit en contact avec la première face A de l'assemblage 13, 14. Une fois ce contact établi (figure 11), l'outil en forme de pince 438 exerce une traction T sur la tige de mandrin 470. De ce fait, la tête de mandrin 433 pénètre à l'intérieur du corps de la douille et forme une tête de blocage 451 en contact de blocage avec la seconde face B de l'assemblage 13, 14. La poursuite de la traction T sur la tige de mandrin provoque la rupture de cette tige en 435.

Le premier outil 460 et la seconde partie 466_{b} de l'outil 461 sont alors retirés de l'assemblage selon les flèches I, E, K et T (figure 12). La douille étirée est alors fermement en prise de part et d'autre de l'assemblage entre une tête de butée 450 et une tête de blocage 451.

Lorsque cesse l'ensemble des forces E, P et T appliquées au rivet selon l'invention, le relâchement des différents matériaux ne produit pas de jeu j entre la tête de la douille et l'assemblage 13, 14. De ce fait, l'accostage du rivet et des pièces est correct et ne se détériore pas dans le temps, comme dans le cas du premier mode de réalisation.

Il est à noter que la première partie 466ₐ du second outil de pose reste à demeure à l'intérieur de la douille.

Dans ce cas, le rivet étant plein, on améliore la tenue au cisaillement de ce rivet et on provoque même un gonflement propice du corps de celui- ci, qui augmente la capacité d'accostage d'un tel rivet.

On notera que la première partie 466ₐ peut indifféremment être considérée comme une première partie du second outil de pose, ou comme un élément de douille. En effet, cette partie 466ₐ peut, dès le départ, être en contact avec la douille et être mise en place avec elle, le second outil ne venant s'appuyer sur cette partie 466ₐ que par la suite.

Ce mode de réalisation permet, tout comme le premier mode de réalisation, d'améliorer l'accostage de matériaux à assembler avec un rivet aveugle, et ceci grâce à la pose du rivet avec une extension de la douille, mais, de plus, il permet d'accroître la résistance au cisaillement du rivetage. Cependant, il nécessite un matériel de pose spécifique, plus complexe que dans le cas du premier mode de réalisation.

En outre, en raison de l'extension de la douille préalablement à son introduction dans l'alésage de l'assemblage, il est possible d'utiliser des douilles dont le diamètre externe est légèrement supérieur à l'alésage. En effet, lors de son extension, le diamètre externe a tendance à se restreindre de sorte qu'il peut être introduit dans l'alésage de l'assemblage. Une fois mise en place, la douille a tendance à reprendre son diamètre original, ce qui assure un certain gonflement et une meilleure tenue du rivet réalisé.

En variante, le rivet selon ce second mode de réalisation peut être mis en place dans l'alésage de l'assemblage et étiré après sa mise en place. Dans ce cas, on retrouve un procédé de rivetage semblable à celui du premier mode de réalisation.

En variante, comme le montre la figure 13, le second outil de pose 461 est formé en une seule partie. Dans ce cas, lors de son retrait (en phase finale du rivetage), aucune partie de cet outil ne reste en place dans la douille. Avantageusement, dans le cadre de cette variante, on rompt la tige de mandrin 570 au niveau du moyen d'appui 544 de la douille, selon une ligne de rupture 535.

Il est à noter que, pour le premier mode de réalisation comme pour le second mode de réalisation, le moyen d'appui 44, 444 peut être un épaulement continu à l'intérieur de l'alésage de la douille, ou bien être un épaulement discontinu. Dans ce cas, on crée une pluralité de moyens d'appui uniformément répartis sur le pourtour de l'alésage de la douille.

On peut également concevoir que le moyen d'appui est un ergot unique placé à l'intérieur de l'alésage.

Le procédé de rivetage de matériaux selon l'invention utilise un rivet aveugle comprenant une douille tubulaire munie d'un alésage longitudinal et un mandrin présentant, d'une part, une tête de diamètre supérieur à l'alésage de la douille, et d'autre part, une tige logée à l'intérieur de l'alésage de la douille et dépassant de celui-ci à l'opposé de la tête, ledit procédé consiste à :
a) introduire le rivet 30, 430 dans un orifice 15 percé à travers les matériaux 13, 14 à assembler, par un côté de cet assemblage de matériaux, et il consiste en outre à :
b) exercer sur la douille une force d'extension entre, d'une part, une tête de butée 50, 450 située à une extrémité de la douille 31, 431 et, d'autre part, un moyen d'appui 44, 444 ménagé à l'intérieur de la douille pour mettre ladite douille en extension longitudinale sur une partie substantielle de sa longueur,
c) bloquer la douille dans cette position d'extension longitudinale de part et d'autre de l'assemblage 13, 14 en conformant une tête de blocage 51, 451 à l'opposé de la tête de butée en contact avec une première face A d'appui de l'assemblage, ladite tête de blocage étant en appui contre une seconde face B d'appui de l'assemblage, et
d) exercer une traction T sur le mandrin, pour provoquer une rupture de la tige de mandrin.

L'introduction du rivet aveugle dans l'alésage de l'assemblage se fait avant ou après la mise en extension de la douille, comme il ressort de la description des premier et second modes de réalisation.

Bien entendu, la présente invention n'est pas limitée aux modes de réalisation décrits. Ainsi, la forme et les dimensions du moyen d'appui 44, 444 peuvent varier sans sortir du domaine de l'invention. De même, le rivet peut être en tout matériau approprié et l'assemblage à réaliser peut concerner plus de deux pièces.

## Revendications

1. Procédé de rivetage de matériaux au moyen d'un rivet aveugle (30, 430) comprenant une douille tubulaire (31, 431) munie d'un alésage longitudinal et un mandrin (32, 432) présentant, d'une part, une tête (33, 433) de diamètre supérieur à l'alésage de la douille, et d'autre part, une tige (36, 37 ; 470) logée à l'intérieur de l'alésage de la douille et dépassant de celui-ci à l'opposé de la tête, ledit procédé consistant à :
a) introduire le rivet, dans un orifice (15) percé à travers des matériaux (13, 14) à assembler, par un côté de cet assemblage de matériaux, et étant caractérisé en ce qu'il consiste en outre à :
b) exercer sur la douille (31, 431) une force d'extension entre, d'une part, une tête de butée (50, 450) située à une extrémité de la douille et, d'autre part, un moyen d'appui (44, 444) ménagé à l'intérieur de la douille pour mettre ladite douille en extension longitudinale sur une partie substantielle de sa longueur,
c) bloquer la douille (31, 431) dans cette position d'extension longitudinale de part et d'autre de l'assemblage (13, 14) en conformant une tête de blocage (51, 451) à l'opposé de la tête de butée (50, 450) en contact avec une première face d'appui A de l'assemblage (13, 14), ladite tête de blocage étant en appui contre une seconde face B d'appui de l'assemblage (13, 14), et
d) exercer une traction sur le mandrin (32, 432), pour provoquer une rupture de la tige de mandrin.

2. Procédé selon la revendication 1, caractérisé en ce qu'on introduit le rivet (30) dans l'orifice (15) percé à travers les matériaux à assembler (13, 14) préalablement à la mise en extension de la douille (31).

3. Procédé de rivetage selon la revendication 1 ou 2, caractérisé en ce qu'on utilise le mandrin (32) pour exercer la force d'extension sur la douille (31), par coopération d'un épaulement (36a) du mandrin avec le moyen d'appui (44).

4. Procédé selon la revendication 1, 2 ou 3, caractérisé en ce qu'on utilise une douille (30) munie d'une tête (43, 143, 243) préformée, ledit procédé consistant en outre à former la tête de butée (50) d'un côté dit aveugle de l'assemblage pendant l'étape b) jusqu'à provoquer une première rupture (34) de la tige de mandrin.

5. Procédé selon la revendication 4, caractérisé en ce qu'il consiste à :
- former la tête de butée (350) d'un côté dit aveugle de l'assemblage par coopération de l'extrémité de la douille (341) adjacente à la tête de mandrin (333) avec une gorge de maintien (352) ménagée à la base de la tête de mandrin, et rupture de la tige de mandrin selon une première rainure de rupture (334).

6. Procédé selon l'une des revendications 1 à 5, caractérisé en ce que :
- on étend le corps (42) de la douille afin de dégager la tête préformée de la seconde face d'appui de l'assemblage, et
- on reforme ladite tête en l'appliquant fermement contre cette seconde face d'appui.

7. Procédé selon l'une des revendications 1 à 6, caractérisé en ce que l'on tire sur le mandrin pendant l'étape d) jusqu'à provoquer la rupture de la tige de mandrin selon une seconde ligne de rupture.

8. Procédé selon l'une des revendications 1 à 7, caractérisé en ce qu'on utilise la traction (T) exercée sur le mandrin, dans un premier temps, pour former la tête de butée (50) avant la première rupture de la tige, et, dans un second temps, pour réaliser une extension de la douille après la première rupture de cette tige.

9. Procédé selon la revendication 1, caractérisé en ce qu'on introduit le rivet dans l'orifice (15) percé à travers les matériaux (13, 14) à assembler après avoir mis en extension la douille.

10. Procédé selon la revendication 9, caractérisé en ce qu'on exerce une force d'extension entre la tête de butée (450) et le moyen d'appui (444) au moyen d'un premier et d'un second outils de pose (460, 461) adaptés respectivement et simultanément pour exercer une traction (T) sur la tête de butée (450) et pour pousser (P) sur le moyen d'appui (444).

11. Procédé selon la revendication 9, caractérisé en ce que le blocage de la douille en position d'extension longitudinale est réalisé par une traction (T) exercée sur la tige de mandrin (470) adaptée pour former la tête de blocage (451) en contact avec la seconde face (B) d'appui de l'assemblage (13, 14).

12. Procédé selon la revendication 11, caractérisé en ce que lorsque le blocage de la douille en position d'extension est réalisé, il consiste à :
- désengager le second outil (461) de son contact avec le moyen d'appui (444),
- désengager le premier outil (460) de la tête de butée (450), et à
- rompre la tige de mandrin (470).

13. Procédé selon la revendication 11, caractérisé en ce que lorsque le blocage de la douille en position d'extension est réalisé, il consiste à :
- laisser en place en contact avec la douille (431) et le mandrin (432) une première partie (466ₐ),
- retirer une seconde partie (466_{b}) du second outil (461) de l'assemblage de matériaux, et
- désengager le premier outil (460) de la tête de butée (450).

14. Rivet aveugle du type utilisé pour la mise en oeuvre du procédé selon les revendications 1 à 8, ledit rivet comportant une douille tubulaire (31) munie d'un alésage longitudinal et un mandrin (32) présentant, d'une part, une tête de diamètre (33) supérieur à l'alésage de la douille, et d'autre part, une tige de mandrin (36, 37) logée à l'intérieur de l'alésage et adaptée pour dépasser de cet alésage du côté opposé à la tête de mandrin, ledit rivet étant caractérisé en ce qu'il comporte, en outre :
. au niveau de la douille :
- une tête préformée (43) à l'extrémité de la douille opposée à la tête de mandrin et,
- un moyen d'appui (44) ménagé à l'intérieur de l'alésage de la douille, au voisinage de la tête préformée (43) et,
. au niveau du mandrin :
- une tige présentant une première et une seconde parties (36, 37) respectivement, et
- une première et une seconde rainures de rupture (34, 35) ménagées selon la circonférence de la tige de mandrin respectivement dans la première et la seconde parties de la tige de mandrin (36, 37).

15. Rivet selon la revendication 14, caractérisé en ce que le moyen d'appui (44) forme une partie annulaire saillante à l'intérieur de l'alésage de la douille.

16. Rivet selon la revendication 15, caractérisé en ce que la partie annulaire (44) saillante est continue sur toute la circonférence interne de l'alésage.

17. Rivet selon la revendication 15, caractérisé en ce que la partie annulaire saillante (44) est discontinue et constitue une pluralité de moyens d'appui distincts répartis uniformément selon la circonférence interne de l'alésage.

18. Rivet selon l'une des revendications 14 à 17, caractérisé en ce que le moyen d'appui (44) est adapté pour se séparer de la douille en fin de rivetage afin de retirer de l'alésage de la douille le tronçon de la tige de mandrin, situé après la première rainure de rupture.

19. Rivet selon la revendication 18, caractérisé en ce que le moyen d'appui (44) est muni d'une rainure de rupture à sa jonction avec le corps tubulaire (42) de la douille.

20. Rivet selon l'une des revendications 14 à 17, caractérisé en ce que le moyen d'appui (44) est adapté pour se déformer en fin de rivetage, pour permettre le retrait du tronçon de la tige de mandrin situé après la première rainure de rupture.

21. Rivet selon l'une des revendications 14 à 20, caractérisé en ce que la tête préformée (43) est rapportée à l'extrémité (41) de la douille opposée à la tête de mandrin et est constituée en un matériau maléable, facile à former par flambage.

22. Rivet selon l'une des revendications 14 à 21, caractérisé en ce que l'extrémité de la douille (341) est adaptée pour pénétrer à l'intérieur d'une gorge de maintien (352) ménagée à la base de la tête de mandrin (333), de sorte que, lors de la traction du mandrin, l'extrémité de la douile (341) se referme sur elle-même et forme la tête de butée (350).

23. Rivet aveugle du type utilisé pour la mise en oeuvre du procédé selon les revendications 1 et 9 à 13, ledit rivet comportant une douille (431) tubulaire munie d'un alésage longitudinal et un mandrin (432) présentant, d'une part, une tête (433) de diamètre supérieur à l'alésage de la douille et, d'autre part, une tige de mandrin (470) logée à l'intérieur de l'alésage de la douille et adaptée pour dépasser de cet alésage du côté opposé à la tête de mandrin (433), ledit rivet étant caractérisé en ce qu'il comporte en outre :
. au niveau de la douille :
- une tête préformée (450) à l'extrémité opposée à la tête de mandrin, ladite tête présentant une surface de préhension (462) agencée pour permettre d'exercer un effort visant une mise en extension de la douille, et une surface d'appui (463) contre une première face A d'un assemblage de matériaux (13, 14) à assembler,
- un moyen d'appui (444) ménagé à l'intérieur de l'alésage de la douille adapté pour former une surface de poussé e agencé e pour permettre d'exercer un effort antagoniste à celui exercé sur la surface de préhension (462) en vue de la mise en extension de la douille, et :
. au niveau du mandrin :
- une tige de mandrin (470) présentant une rainure de rupture (435).

24. Rivet aveugle selon la revendication 23, caractérisé en ce que le moyen d'appui (444) est réalisé près de l'extrémité (441) de la douille adjacente à la tête de mandrin (433).

25. Rivet aveugle selon la revendication 23 ou 24, caractérisé en ce que la surface de préhension (462) est un épaulement annulaire et est continu sur toute la circonférence de la tête préformée (450).

26. Rivet aveugle selon la revendication 23 ou 24, caractérisé en ce que la surface de préhension (462) est un épaulement annulaire discontinu selon la circonférence de la tête préformée et constitue une pluralité d'épaulements répartis uniformément selon la circonférence de la tête.

27. Rivet aveugle selon la revendication 23 ou 24, caractérisé en ce que la surface de préhension (462) est une gorge annulaire.

28. Rivet aveugle selon la revendication 23 ou 24, caractérisé en ce que la surface de préhension (462) est constituée par deux encoches réparties de part et d'autre de la tête préformée et adaptée pour recevoir le premier outil (461) de pose.

## Claims

1. Method of riveting materials by means of a blind rivet (30, 430) comprising a tubular sleeve (31, 431) with a longitudinal bore and a mandrel (32, 432) having, on the one hand, a head (33, 433), the diameter of which is larger than that of the sleeve bore, and, on the other hand, a shaft (36, 37; 470) located within the bore of the sleeve and protruding from the latter opposite the head, whereby said method consists in:
a) introducing the rivet into an orifice (15) drilled through materials (13, 14) to be assembled, from one side of said assembly of materials, and characterised in that it consists moreover in
b) applying to the sleeve (31, 431) an extension force between, on the one hand, an abutting head (50, 450) situated at one end of the sleeve and, on the other hand, a support means (44, 444) provided within the sleeve with a view to bringing about longitudinal extension of said sleeve over a substantial part of its length,
c) blocking the sleeve (31, 431) in said position of longitudinal extension on either side of the assembly (13, 14) by forming a blocking head (51, 451) opposite the abutting head (50, 450) in contact with a first support face A of the assembly (13, 14), said blocking head resting against a second support face B of the assembly (13, 14), and
d) exerting a pull on the mandrel (32, 432) in order to cause fracturing of the mandrel shaft.

2. Method according to Claim 1, characterised in that the rivet (30) is introduced into the orifice (15) drilled through the materials to be assembled (13, 14), prior to bringing about extension of the sleeve (31).

3. Riveting method according to Claim 1 or 2, characterised in that use is made of the mandrel (32) in order to apply the extension force to the sleeve (31) by means of a shoulder (36a) of the mandrel acting together with the support means (44).

4. Method according to Claim 1, 2 or 3, characterised in that use is made of a sleeve (30) with a preformed head (43, 143, 243), said method consisting moreover in forming, in the course of stage b), the abutting head (50) on one side of the assembly, the so-called blind side, until a first fracture (34) of the mandrel shaft has been caused.

5. Method according to Claim 4, characterised in that it consists in:
- forming the abutting head (350) on one side of the assembly, the so-called blind side, by means of the end of the sleeve (341) adjacent to the mandrel head (333) acting together with a retaining groove (352) provided at the base of the mandrel head and fracturing the shaft of the mandrel along a first fracture groove (334).

6. Method according to one of Claims 1 to 5, characterised in that:
- the body (42) of the sleeve is extended in order to detach the preformed head from the second support face of the assembly, and
- said head is reformed by being firmly pressed against said second support face.

7. Method according to one of Claims 1 to 6, characterised in that, in the course of stage d), a pull is exerted on the mandrel until fracturing of the mandrel shaft is caused along a second fracture line.

8. Method according to one of Claims 1 to 7, characterised in that the pull (T) exerted on the mandrel serves, firstly, to form the abutting head (50) prior to the initial fracturing of the shaft and, secondly, to cause an extension of the sleeve after the initial fracturing of said shaft.

9. Method according to Claim 1, characterised in that the rivet is introduced into the orifice (15) drilled through the materials (13, 14) to be assembled after extension of the sleeve.

10. Method according to Claim 9, characterised in that an extension force is applied between the abutting head (450) and the support means (444) by means of a first and a second setting tool (460, 461) so designed as to exert, respectively and simultaneously, a pull (T) on the abutting head (450) and a push (P) against the support means (444).

11. Method according to Claim 9, characterised in that blocking of the sleeve in the longitudinally extended position is brought about by a pull (T) exerted on the mandrel shaft (470) which is so designed as to form the blocking head (451) in contact with the second support face (B) of the assembly (13, 14).

12. Method according to Claim 11, characterised in that, once the sleeve has been blocked in the extended position, it consists in:
- disengaging the second tool (461) from its contact with the support means (444)
- disengaging the first tool (460) from the abutting head (450), and in
- breaking the mandrel shaft (470).

13. Method according to Claim 11, characterised in that, once the sleeve has been blocked in its extended position, it consists in
- leaving a first part (466ₐ) in contact with the sleeve (431) and the mandrel (432),
- withdrawing a second part (466_{b}) of the second tool (461) of the assembly of materials, and
- disengaging the first tool (460) from the abutting head (450).

14. Blind rivet of the type used to implement the method according to Claims 1 to 8, said rivet comprising a tubular sleeve (31) with a longitudinal bore and a mandrel (32) having, on the one hand, a head (33), the diameter of which is larger than that of the bore of the sleeve, and, on the other hand, a mandrel shaft (36, 37) located within the bore and so designed as to protrude, on the side opposite the mandrel head, from said bore, said rivet being characterised in that it comprises moreover:
. at the level of the sleeve:
- a preformed head (43) at the end of the sleeve opposite the mandrel head, and
- a support means (44) provided within the bore of the sleeve, close to the preformed head (43), and
. at the level of the mandrel:
- a shaft having, respectively, a first and a second section (36, 37) and
- a first and a second fracture groove (34, 35) provided about the circumference of the mandrel shaft in the first and the second section of the mandrel shaft (36, 37) respectively.

15. Rivet according to Claim 14, characterised in that the support means (44) constitutes a projecting annular part within the bore of the sleeve.

16. Rivet according to Claim 15, characterised in that the projecting annular part (44) is continuous over the entire internal circumference of the bore.

17. Rivet according to Claim 15, characterised in that the projecting annular part (44) is discontinuous and constitutes a plurality of separate support means uniformly distributed over the internal circumference of the bore.

18. Rivet according to one of Claims 14 to 17, characterised in that the support means (44) is so designed as to come away from the sleeve at the end of the riveting operation, with a view to withdrawing from the bore of the sleeve the section of the mandrel shaft situated beyond the first fracture groove.

19. Rivet according to Claim 18, characterised in that the support means (44) is provided with a fracture groove where it joins the tubular body (42) of the sleeve.

20. Rivet according to one of Claims 14 to 17, characterised in that the support means (44) is so designed as to be deformed at the end of the riveting operation, in order to enable the section of the mandrel shaft situated beyond the first fracture groove to be withdrawn.

21. Rivet according to one of Claims 14 to 20, characterised in that the preformed head (43) is joined to the end (41) of the sleeve opposite the mandrel head and consists of a malleable material readily formed by buckling.

22. Rivet according to one of Claims 14 to 21, characterised in that the end of the sleeve (341) is so designed as to penetrate into a retaining groove (352) provided at the base of the mandrel head (333) so that when the mandrel is subjected to pull, the end of the sleeve (341) closes upon itself and forms the abutting head (350).

23. Blind rivet of the type used for implementing the method according to Claims 1 and 9 to 13, whereby said rivet comprises a tubular sleeve (431) with a longitudinal bore and a mandrel (432) having, on the one hand, a head (433), the diameter of which is larger than that of the bore of the sleeve, and, on the other hand, a mandrel shaft (470) located within the bore of the sleeve and so designed as to protrude from said bore on the side opposite the mandrel head (433), said rivet being characterised in that it comprises moreover
. at the level of the sleeve:
- a preformed head (450) at the end opposite the mandrel head, whereby said head has a gripping surface (462) arranged to enable application of a force with a view to extending the sleeve and a support face (463) resting against a first face A of an assembly of materials (13, 14) to be assembled:
- a support means (444) provided within the bore of the sleeve and so designed as to constitute a thrust face arranged to enable application of a force opposite to the one applied to the gripping surface (462) with a view to bringing about extension of the sleeve, and:
. at the level of the mandrel:
- a mandrel shaft (470) having a fracture groove (435).

24. Blind rivet according to Claim 23, characterised in that the support means (444) is provided close to the end (441) of the sleeve adjacent to the mandrel head (433).

25. Blind rivet according to Claim 23 or 24, characterised in that the gripping surface (462) is an annular shoulder and is continuous over the entire circumference of the preformed head (450).

26. Blind rivet according to Claim 23 or 24, characterised in that the gripping surface (462) is a discontinuous annular shoulder over the circumference of the preformed head and constitutes a plurality of shoulders uniformly distributed over the circumference of the head.

27. Blind rivet according to Claim 23 or 24, characterised in that the gripping surface (462) is an annular groove.

28. Blind rivet according to Claim 23 or 24, characterised in that the gripping surface (462) is constituted by two notches distributed on either side of the preformed head and designed to accommodate the first setting tool (461).

## Patentansprüche

1. Verfahren zum Nieten von Materialien mit Hilfe eines Blindniets (30, 430), umfassend eine rohrförmige Hülse (31, 431), die mit einer Längsbohrung versehen ist, und einen Dorn (32, 432), der einerseits einen Kopf (33, 433), dessen Durchmesser größer ist als der der Hülsenbohrung, und andererseits einen innerhalb der Hülsenbohrung befindlichen Schaft (36, 37; 470) aufweist, der an der dem Kopf entgegengesetzten Seite über die besagte Bohrung hinausgeht, wobei das besagte Verfahren darin besteht,
a) daß der Niet in eine durch die zu verbindenden Materialen (13, 14) hindurch gebohrte Öffnung (15) eingeführt wird, und zwar von einer Seite des besagten Materialverbandes,
und dadurch gekennzeichnet ist, daß es des weiteren darin besteht,
b) daß auf die Hülse (31, 431) zwischen einerseits einem Anschlagkopf (50, 450), der sich an dem einen Ende der Hülse befindet, und andererseits einem im Inneren der Hülse vorgesehenen Abstützmittel (44, 444) eine Dehnkraft ausgeübt wird, um die besagte Hülse innerhalb eines erheblichen Teils ihrer Länge der Länge nach zu dehnen,
c) daß die Hülse (31, 431) in der besagten Lage länglicher Dehnung zu beiden Seiten des Verbandes (13, 14) blockiert wird, indem auf der dem Anschlagkopf (50, 450) entgegengesetzten Seite ein Blockierkopf (51, 451) gebildet wird, der mit einer ersten Abstützfläche A des Verbandes (13, 14) in Kontakt ist, wobei der besagte Blockierkopf an eine zweite Abstützfläche B des Verbandes (13, 14) anschließt und,
d) daß auf den Dorn (32, 432) ein Zug ausgeübt wird, um Bruch des Dornschafts zu bewirken.

2. Verfahren nach Anspruch 1, dadurch gekennzeichnet, daß man den Niet (30) in die durch die zu verbindenden Materialien (13, 14) gebohrte Öffnung (15) einführt, bevor die Hülse (31) gedehnt wird.

3. Nietverfahren nach Anspruch 1 oder 2, dadurch gekennzeichnet, daß man von dem Dorn (32) Gebrauch macht, um die Dehnkraft durch Zusammenwirken einer Schulter (36a) des Dornes mit dem Abstützmittel (44) auf die Hülse (31) auszuüben.

4. Verfahren nach Anspruch 1, 2 oder 3, dadurch gekennzeichnet, daß man von einer mit einem vorgeformten Kopf (43, 143, 243) versehenen Hülse (30) Gebrauch macht, wobei das besagte Verfahren des weiteren darin besteht, daß der Anschlagkopf (50) während der Stufe b) an einer Seite, der sogenannten blinden Seite, des Verbandes geformt wird, bis ein erster Bruch (34) des Dornschafts bewirkt wird.

5. Verfahren nach Anspruch 4, dadurch gekennzeichnet, daß es darin besteht,
- daß der Anschlagkopf (350) an einer Seite, der sogenannten blinden Seite, des Verbandes durch Zusammenwirken des an den Dornkopf (333) anschließenden Hülsenendes (341) mit einer am Fuß des Dornkopfs vorgesehenen Haltenut (352) geformt und der Dornschaft an einer ersten Brechnut (334) entlang gebrochen wird.

6. Verfahren nach einem der Ansprüche 1 bis 5, dadurch gekennzeichnet,
- daß man den Körper (42) der Hülse dehnt, um den vorgeformten Kopf von der zweiten Abstützfläche des Verbandes zu lösen, und
- daß man den besagten Kopf nachformt, indem man ihn fest an die besagte zweite Abstützfläche anpreßt.

7. Verfahren nach einem der Ansprüche 1 bis 6, dadurch gekennzeichnet, daß man während der Stufe d) einen Zug auf den Dorn ausübt, bis bewirkt wird, daß der Dornschaft an einer zweiten Brechlinie entlang bricht.

8. Verfahren nach einem der Ansprüche 1 bis 7, dadurch gekennzeichnet, daß man den auf den Dorn ausgeübten Zug (T) in erster Linie dazu verwertet, um vor dem ersten Schaftbruch den Anschlagkopf (50) zu formen und in zweiter Linie, um Dehnung der Hülse nach dem ersten Bruch des besagten Schaftes zu bewirken.

9. Verfahren nach Anspruch 1, dadurch gekennzeichnet, daß man den Niet in die durch die zu verbindenden Materialien (13, 14) hindurch gebohrte Öffnung (15) einführt, nachdem die Hülse gedehnt wurde.

10. Verfahren nach Anspruch 9, dadurch gekennzeichnet, daß man zwischen dem Anschlagkopf (450) und dem Abstützmittel (444) eine Dehnkraft ausübt, und zwar mit Hilfe eines ersten und eines zweiten Setzwerkzeugs (460, 461), die so beschaffen sind, daß sie jeweils und gleichzeitig einen Zug (T) auf den Anschlagkopf (450) und einen Schub (P) auf das Abstützmittel (444) ausüben.

11. Verfahren nach Anspruch 9, dadurch gekennzeichnet, daß die Blockierung der Hülse in der Längsdehnlage durch einen Zug (T) bewirkt wird, und zwar wird dieser Zug auf den Dornschaft (470) ausgeübt, der so beschaffen ist, daß er in Kontakt mit der zweiten Abstützfläche (B) des Verbandes (13, 14) den Blockierkopf (451) bildet.

12. Verfahren nach Anspruch 11, dadurch gekennzeichnet, daß es, sobald die Blockierung der Hülse in der Dehnlage bewirkt wurde, darin besteht,
- daß der Kontakt zwischen dem zweiten Werkzeug (461) und dem Abstützmittel (444) abgebrochen wird,
- daß das erste Werkzeug (460) von dem Anschlagkopf (450) abgerückt wird, und
- daß der Dornschaft (470) gebrochen wird.

13. Verfahren nach Anspruch 11, dadurch gekennzeichnet, daß es, sobald die Blockierung der Hülse in der Dehnlage bewirkt wurde, darin besteht,
- daß ein erster Abschnitt (466ₐ) mit der Hülse (431) und dem Dorn (432) in Kontakt belassen wird,
- daß ein zweiter Abschnitt (466_{b}) des zweiten Werkzeugs (461) aus dem Materialverband zurückgezogen wird und
- daß das erste Werkzeug (460) von dem Anschlagkopf (450) abgerückt wird.

14. Blindniet der zur Durchführung des Verfahrens nach den Ansprüchen 1 bis 8 benutzten Art, wobei der besagte Niet eine mit einer Längsbohrung versehene rohrförmige Hülse (31) umfaßt, sowie einen Dorn (32), der einerseits einen Kopf (33), dessen Durchmesser größer ist als der der Hülsenbohrung, und andererseits einen im Inneren der Bohrung befindlichen Dornschaft (36, 37) aufweist, der so beschaffen ist, daß er auf der dem Dornkopf entgegengesetzten Seite über die besagte Bohrung hinausgeht, wobei der besagte Niet dadurch gekennzeichnet ist, daß er des weiteren folgende Teile umfaßt:
. im Bereiche der Hülse:
- einen vorgeformten Kopf (43) an dem dem Dornkopf entgegengesetzten Hülsenende und
- ein im Inneren der Hülsenbohrung und nahe dem vorgeformten Kopf (43) vorgesehenes Abstützmittel (44) und
. im Bereiche des Dornes:
- einen Schaft mit einem ersten bzw. zweiten Abschnitt (36, 37) und
- eine erste und eine zweite Brechnut (34, 35), die an der Peripherie des Dornschafts entlang innerhalb des ersten bzw. des zweiten Abschnitts des Dornschafts (36, 37) vorgesehen sind.

15. Niet nach Anspruch 14, dadurch gekennzeichnet, daß das Abstützmittel (44) im Inneren der Hülsenbohrung ein vorstehendes Ringelement bildet.

16. Niet nach Anspruch 15, dadurch gekennzeichnet, daß das vorstehende Ringelement (44) innerhalb der gesamten Innenperipherie der Bohrung kontinuierlich ist.

17. Niet nach Anspruch 15, dadurch gekennzeichnet, daß das vorstehende Ringelement (44) diskontinuierlich ist und eine Mehrzahl getrennter Abstützmittel bildet, die gleichmäßig an der Innenperipherie der Bohrung entlang verteilt sind.

18. Niet nach einem der Ansprüche 14 bis 17, dadurch gekennzeichnet, daß das Abstützmittel (44) so beschaffen ist, daß es sich bei Abschluß des Nietvorgangs von der Hülse löst, um den Abschnitt des Dornschaftes, der sich hinter der ersten Brechnut befindet, aus der Hülsenbohrung herauszuziehen.

19. Niet nach Anspruch 18, dadurch gekennzeichnet, daß das Abstützmittel (44), wo es an den rohrförmigen Körper (42) der Hülse anschließt, mit einer Brechnut versehen ist.

20. Niet nach einem der Ansprüche 14 bis 17, dadurch gekennzeichnet, daß das Abstützmittel (44) so beschaffen ist, daß es sich bei Abschluß des Nietvorgangs verformt, so daß der hinter der ersten Brechnut befindliche Abschnitt des Dornschafts zurückgezogen werden kann.

21. Niet nach einem der Ansprüche 14 bis 20, dadurch gekennzeichnet, daß der vorgeformte Kopf (43) an dem Ende (41) der Hülse auf der dem Dornkopf gegenüberliegenden Seite angebracht und aus einem verformbaren Material gefertigt ist, daß sich leicht durch Knicken formen läßt.

22. Niet nach einem der Ansprüche 14 bis 21, dadurch gekennzeichnet, daß das Ende der Hülse (341) so beschaffen ist, daß es in eine am Fuß des Dornkopfes (333) vorgesehene Haltenut (352) eindringt, so daß sich, wenn auf den Dorn Zug ausgeübt wird, das Ende der Hülse (341) auf sich selbst zu schließt und den Anschlagkopf (350) bildet.

23. Blindniet der zur Durchführung des Verfahrens nach den Ansprüchen 1 und 9 bis 13 benutzten Art, wobei der besagte Niet eine mit einer Längsbohrung versehene rohrförmige Hülse (431) sowie einen Dorn (432) umfaßt, der einerseits einen Kopf (433), dessen Durchmesser größer ist als der der Hülsenbohrung, und andererseits einen im Inneren der Hülsenbohrung befindlichen Dornschaft (470) aufweist, der so beschaffen ist, daß er auf der dem Dornkopf (433) entgegengesetzten Seite über die besagte Bohrung hinausgeht, und zwar ist der besagte Niet dadurch gekennzeichnet, daß er des weiteren folgende Teile umfaßt:
. im Bereich der Hülse:
- einen vorgeformten Kopf (450) an dem dem Dornkopf entgegengesetzten Ende, wobei der besagte Kopf eine Greiffläche (462) aufweist, die so angeordnet ist, daß sie die Ausübung einer Kraft zwecks Dehnung der Hülse gestattet, sowie eine an eine erste Fläche A eines zu verbindenden Materialverbandes (13, 14) anschließende Abstützfläche (463),
- ein im Inneren der Hülsenbohrung vorgesehenes Abstützmittel (444), das so beschaffen ist, daß es eine Schubfläche bildet, und zwar ist die besagte Schubfläche so angeordnet, daß sie es gestattet, eine Kraft auszuüben, die zu der auf die Greiffläche (462) ausgeübten Kraft entgegengesetzt ist, um die Hülse zu dehnen, und
. im Bereiche des Dornes
- einen Dornschaft (470) mit einer Brechnut (435).

24. Blindniet nach Anspruch 23, dadurch gekennzeichnet, daß das Abstützmittel (444) nahe dem an den Dornkopf (433) anschließenden Hülsenende (441) vorgesehen ist.

25. Blindniet nach Anspruch 23 oder 24, dadurch gekennzeichnet, daß die Greiffläche (462) eine ringförmige Schulter und an der gesamten Peripherie des vorgeformten Kopfes (450) entlang kontinuierlich ist.

26. Blindniet nach Anspruch 23 oder 24, dadurch gekennzeichnet, daß die Greiffläche (462) eine diskontinuierliche ringförmige Schulter an der Peripherie des vorgeformten Kopfes entlang ist und eine Mehrzahl von Schultern bildet, die an der Peripherie des Kopfes entlang gleichmäßig verteilt sind.

27. Blindniet nach Anspruch 23 oder 24 dadurch gekennzeichnet, daß die Greiffläche (462) eine ringförmige Nut ist.

28. Blindniet nach Anspruch 23 oder 24 dadurch gekennzeichnet, daß die Greiffläche (462) durch zwei zu beiden Seiten des vorgeformten Kopfes verteilte Einkerbungen gebildet und so beschaffen ist, daß sie das erste Setzwerkzeug (461) aufnimmt.
